# EUROPÄISCHE PATENTSCHRIFT

(11) **EP 4 249 355 B1**
(45) Veröffentlichungstag und Bekanntmachung des Hinweises auf die Patenterteilung: **04.11.2026**
(21) Anmeldenummer: 23163325.6
(22) Anmeldetag: 22.03.2023
(51) Int. Cl.: B62D 55/02, B62D 63/02

(54) **ZUSTELLWAGEN**
DELIVERY CARRIAGE
CHARIOT DE LIVRAISON

(30) Priorität: 22.03.2022 AT 501852022
(43) Veröffentlichungstag der Anmeldung: 27.09.2023
(73) Patentinhaber: Österreichische Post AG, 1030 Wien (AT)
(72) Erfinder: PERNER, Wolfgang E., 4810 Gmunden (AT)
(74) Vertreter: SONN Patentanwälte GmbH & Co KG

(56) Entgegenhaltungen:
- EP-A2- 0 711 698
- WO-A1-2016/111423
- US-A- 4 061 199

## Beschreibung

Die Erfindung betrifft einen Zustellwagen gemäß dem Oberbegriff von Anspruch 1.

Ein solcher Zustellwagen ist aus der EP 0 711 698 A2 bekannt. Das Fahrwerk des Zustellwagens ist mit einer Einrichtung zum Überwinden von stufenartigen Fahrbahnversetzungen, insbesondere Bordsteinkanten, ausgestattet. Zu diesem Zweck ist eine zur Fahrebene unter einem Winkel von wenigstens 20° angestellte Rampe vorgesehen, welche durch einen Stollenriemen gebildet ist, der über zwei Umlenkrollen geführt wird. In der dargestellten Ausführung wird der Stollenriemen passiv bewegt, wobei die Kraft zur Überwindung der Bordsteinkante über Radnabenmotoren an den hinteren Bockrollen aufgebracht wird. Diese Konstruktion hat jedoch den Nachteil, dass die Rampe zur Vermeidung von Selbsthemmung flach und daher langgestreckt ausgeführt werden muss, wodurch die Lenkrollen weit nach hinten rücken müssen. Ohne eigenen Antrieb gestaltet sich zudem das Überwinden des Hindernisses als schwierig. Darüber hinaus wird in der EP 0 711 698 A2 erwähnt, dass der Stollenriemen mit einem Elektromotor angetrieben werden kann. Allerdings wird keine praktikable Lösung angegeben, wo der Elektromotor bei den sehr beschränkten Platzverhältnissen untergebracht werden könnte. In der EP 0 711 698 A2 werden für die Bockrollen Radnabenmotoren erwähnt, welche jedoch bei Anbringung innerhalb einer der Umlenkrollen nicht das erforderliche Anfahrmoment aufbringen könnten. Bei einer Anordnung des Radnabenmotors axial außerhalb der Umlenkrolle bestünde wiederum das Problem, dass die vorderen Lenkrollen mit dem Radnabenmotor kollidieren würden.

Aus der WO 2016/111423 A1 ist eine mobile Vorrichtung bekannt, welche in der Lage ist Hindernisse zu überwinden. Die Vorrichtung weist einen Rahmen auf, an welchem angetriebene Vorder- und Hinterräder sowie mittig angeordnete Antriebsräder angeordnet sind. Die Antriebsräder der mobilen Vorrichtung 100 werden durch die Antriebsmotoren angetrieben. Die Vorrichtung weist zudem einen Raupenantrieb zum Überwinden von Hindernissen auf. Dieser Raupenantrieb besteht aus einem Endloselement, einer das Endloselement antreibenden Rolle und einer angetriebenen Rolle. Die antreibende Rolle wird durch einen Elektromotor bewegt. Ein Aktuator bewirkt ein Drehmoment auf eine Übertragungsschiene. Diese lässt die Konstruktion nach unten ausschwenken, womit die mobile Vorrichtung angehoben wird. Durch das Anheben kann nun die Vorrichtung auf ein Hindernis zufahren und dieses mit der Raupe überwinden. Der Elektromotor und der Aktuator sind innerhalb eines Befestigungsgehäuses, seitlich der Raupe, angeordnet. Demgegenüber sieht die weiter unten beschriebene Erfindung eine Aufhängeeinrichtung zur Aufhängung des Raupenantriebs am Fahrgestell vor, wobei die Aufhängeeinrichtung zwei Aufhängeteile aufweist, an welchen die hintere Achse der hinteren Umlaufrolle und die vordere Achse der vorderen Umlaufrolle gelagert sind. Wesentlich für die Erfindung ist zudem, dass der Elektromotor zwischen den zwei Aufhängeteilen der Aufhängeeinrichtung angeordnet ist. Diese Ausführung hat den Vorteil, dass eine Kollision mit den Vorderrädern, welche insbesondere als Lenkrollen ausgeführt sind, zuverlässig vermieden werden kann, insbesondere auch bei starken Einschlagwinkeln und großen Durchmessern der Vorderräder. Somit ist die erfindungsgemäße Ausführung für einen Einsatz bei Post-Zustellerwagen optimiert. Im Unterschied zur Erfindung sind bei der WO 2016/111423 A1 nicht die Vorder- und Hinterachse an den Aufhängeteilen gelagert. Lediglich die Vorderachse ist in einem Befestigungsgehäuse gelagert, in welchem der Motor aufgenommen ist. Darüber hinaus ist der WO 2016/111423 A1 nicht die Lehre zu entnehmen, den Motor zwischen zwei Aufhängeteilen anzuordnen. Bei der WO 2016/111423 A1 erstrecken sich Abschnitte des Befestigungsgehäuses mit den Motoren auf jeder Seite des Endloselements seitlich nach außen. Als Aufhängeteile sind bei der WO 2016/111423 A1 die Oberseiten des Befestigungsgehäuses ausgebildet, mit denen das Befestigungsgehäuse an der Unterseite des Fahrgestells befestigt wird. Somit erstreckt sich der Motor der WO 2016/111423 A1 gerade nicht zwischen den zwei Aufhängeteilen, sondern darunter, so dass das Befestigungsgehäuse von der Vorderradlagerung seitlich nach außen absteht. Dieser Stand der Technik gibt auch keinen Hinweis auf die erfindungsgemäße Lösung, die Vorder- und die Hinterachse an zwei Aufhängeteilen zu lagern und den Motor zwischen diesen zwei Aufhängeteilen vorzusehen, um den Raupenantrieb möglichst schmal auszubilden. Die WO 2016/111423 A1 bringt gerade jenen seitlichen Überstand des Motors mit sich, den die Erfindung vermeiden möchte.

Demzufolge besteht die Aufgabe der vorliegenden Erfindung darin, zumindest einzelne Nachteile des Standes der Technik zu lindern bzw. zu beheben. Die Erfindung setzt sich insbesondere zum Ziel, einen Zustellwagen der eingangs angeführten Art zu schaffen, bei welchem die Einrichtung zur Überwindung des Fahrbahnabsatzes an die beschränkten Platzverhältnisse unterhalb des Laderaums angepasst ist, wobei selbst bei hohen Zuladungen Fahrbahnabsätze ohne Beschädigung des Zustellwagens zuverlässig überwunden werden sollen.

Diese Aufgabe wird durch einen Zustellwagen gemäß dem kennzeichnenden Teil von Anspruch 1 gelöst. Bevorzugte Ausführungsformen sind in den abhängigen Ansprüchen angegeben.

Für die Zwecke dieser Offenbarung beziehen sich die Orts- und Richtungsangaben, wie "horizontal", "vertikal", "oben", "unten", auf die bestimmungsgemäße Anordnung des Zustellwagens auf einer ebenen, horizontalen Fahrbahn.

Beim Fahren auf einer ebenen, horizontalen Fahrbahn ist der Raupenantrieb von der Fahrbahn abgehoben, wobei die Vorwärts-(oder Rückwärtsbewegung) des Zustellwagens über die Vorder-und/oder Hinterräder am Fahrgestell, mit oder ohne Unterstützung durch den Benutzer, bewerkstelligt wird. Zur Überwindung eines Fahrbahnabsatzes ist der Raupenantrieb vorgesehen, welcher (in Fahrtrichtung bei Geradeausvorwärtsfahrt gesehen) vor die Vorderräder vorragt. Bei Erreichen des Fahrbahnabsatzes trifft die Abrollfläche des Raupenantriebs vor den Vorderrädern auf den Fahrbahnabsatz. Durch die umlaufende Bewegung der gegenüber der horizontalen Fahrbahn vor dem Fahrbahnabsatz angestellten Abrollfläche werden die Vorderräder von der Fahrbahn abgehoben, bevor die Vorderräder auf den Fahrbahnabsatz auftreffen. Bevorzugt ist ein ebener Abschnitt der Abrollfläche an der Vorderseite des Raupenantriebs, beispielsweise in einem Winkel von mehr als 20°, insbesondere von mehr als 30°, beispielsweise mehr als 40°, und vorzugsweise weniger als 88°, zur Horizontalen geneigt. Dadurch können die Vorderräder den Fahrbahnabsatz überwinden. Der Raupenantrieb ist dabei mit einem Elektromotor ausgestattet, welcher zur Kraftübertragung auf die die hintere Umlaufrolle eingerichtet ist. Der Elektromotor befindet sich dabei, in horizontaler Richtung gesehen, zwischen den zwei Aufhängeteilen der Aufhängeeinrichtung, an welchen die Achsen der vorderen und hinteren Umlaufrolle gelagert sind. Somit ist der Elektromotor bevorzugt horizontal überlappend mit dem Raupenantrieb angeordnet. Vertikal von oben gesehen ist der Elektromotor dabei insbesondere an derselben Querposition in Querrichtung des Fahrgestells angeordnet. Demgegenüber ist der Elektromotor der WO 2016/111423 A1 seitlich neben der Raupe angeordnet. Dabei steht der Elektromotor seitlich, d.h. in Querrichtung des Fahrgestells, nicht über die Aufhängeteile vor, welche durch stehend angeordnete Aufhängeplatten gebildet sind. Vorteilhafterweise kann somit eine Kollision mit den Vorderrädern, welche insbesondere als Lenkrollen ausgeführt sind, zuverlässig vermieden werden, insbesondere auch bei starken Einschlagwinkeln und großen Durchmessern der Vorderräder. Darüber hinaus hat die Anordnung des Elektromotors zwischen den Aufhängeteilen den Vorteil, dass der Elektromotor gegenüber Einwirkungen von außen geschützt vorliegt.

Bevorzugt weist der Aufbau eine ebene Bodenplatte zur Anordnung des Transportguts auf, wobei der Raupenantrieb unter einem vorderen Abschnitt der ebenen Bodenplatte angeordnet ist. Da die Abrollfläche des Raupenantriebs gegenüber der Horizontalen angestellt ist und die vordere Umlaufrolle daher näher an der Bodenplatte liegt, treibt der Elektromotor die hintere Umlaufrolle an. Bei dieser Ausführung ist zwischen den Aufhängeteilen ausreichend Platz für den Elektromotor.

Bei einer bevorzugten Ausführungsform setzt die Abrollfläche unterhalb der Mittelpunkte der Vorderräder an, um die Vorderräder vor dem Auftreffen auf den Fahrbahnabsatz so weit anzuheben, dass die Vorderräder den Fahrbahnabsatz überwinden können.

Um das Überwinden des Fahrbahnabsatzes, insbesondere der Bordsteinkante, zu erleichtern, ist der Raupenantrieb bei einer bevorzugten Ausführungsform (in Richtung der Verbindungslinie zwischen den Mittelpunkten der Vorderräder gesehen) im Wesentlichen mittig zwischen den zwei Vorderrädern angeordnet.

Als Endloselement weist der Raupenantrieb vorzugsweise eine Raupenkette, insbesondere eine Bandkette, auf. Besonders bevorzugt ist eine Ausführung des Endloselements als Gummibandkette.

Die Abrollfläche entspricht der Hauptebene des Endloselements an der Vorderseite des Raupenantriebs. Bei einer bevorzugten Ausführungsform stehen von der, vorzugsweise einen ebenen Abrollabschnitt aufweisenden, Abrollfläche einzelne Profile hoch, welche bevorzugt durch Leisten gebildet sind.

Zur umlaufenden Bewegung des Endloselements weist der Raupenantrieb die vordere und die hintere Umlaufrolle auf, welche bevorzugt im Wesentlichen gleiche Durchmesser aufweisen. Bevorzugt ist nur die hintere Umlaufrolle mit dem Motor gekoppelt, um das Endloselement in eine umlaufende Bewegung zu versetzen. Die vordere Umlaufrolle ist bevorzugt passiv. Das Endloselement kann an der Innenseite Führungszähne aufweisen, in welche Zähne der vorderen und der hinteren Umlaufrolle eingreifen.

Mit Hilfe des Getriebes, welches insbesondere ein Schneckengetriebe ist, kann eine Rotationsbewegung des Motors auf die hintere Umlaufrolle übertragen werden.

Durch das Transmissionselement, welches insbesondere eine Kette ist, hat sich der Zustellwagen für hohe Zuladungen als besonders günstig erwiesen. Zudem kann der Kraftfluss wirksam vom Elektromotor zwischen den zwei Aufhängeteilen auf die hintere Achse der hinteren Umlaufrolle übertragen werden. Das Transmissionselement ist bevorzugt über ein vorderes Übertriebselement, insbesondere einen vorderen Zahnkranz, geführt, welcher mit einer Abtriebswelle des Getriebes verbunden ist. Weiters ist das Transmissionselement bevorzugt über ein hinteres Übertriebselement, insbesondere einen hinteren Zahnkranz, geführt, welcher mit der hinteren Achse der hinteren Umlaufrolle verbunden ist. Vorzugsweise weist das hintere Übertriebselement, insbesondere der hintere Zahnkranz, einen größeren Durchmesser als das vordere Übertriebselement, insbesondere der vordere Zahnkranz, auf. Bevorzugt ist das Transmissionselement außerhalb des Raums zwischen den zwei Aufhängeteilen angeordnet. Das Transmissionselement kann mit einer abnehmbaren Abdeckhaube abgedeckt sein.

Die Aufhängeeinrichtung ist zur Aufhängung des Raupenantriebs am Fahrgestell eingerichtet. Die Aufhängeeinrichtung weist zwei Aufhängeplatten auf, die bevorzugt im Wesentlichen vertikal angeordnet sind. Bei dieser Ausführung ist der Raupenantrieb zwischen den zwei Aufhängeplatten gelagert. Die vordere Umlaufrolle ist über die vordere Achse und die hintere Umlaufrolle ist über die hintere Achse an der Aufhängeeinrichtung, insbesondere an den zwei Aufhängeplatten, gelagert. Die vordere Achse ist weiter vorne und weiter oben als die hintere Achse angeordnet.

Um Beschädigungen beim Auftreffen auf den Fahrbahnabsatz vorzubeugen, ist die hintere Achse der hinteren Umlaufrolle bei einer bevorzugten Ausführungsform (abgesehen von ihrer Rotationsbewegung) im Wesentlichen unbeweglich an der Aufhängeeinrichtung, insbesondere an zwei Aufhängeplatten der Aufhängeeinrichtung, gelagert und die vordere Achse der vorderen Umlaufrolle ist (zusätzlich zu ihrer Rotationsbewegung) entlang einer Führung, insbesondere entlang einer Langlochführung, beweglich an der Aufhängeeinrichtung, insbesondere an den zwei Aufhängeplatten der Aufhängeeinrichtung, gelagert. Dadurch kann der Raupenantrieb beim Auftreffen auf den Fahrbahnabsatz verkippt werden, wobei die vordere Achse der vorderen Umlaufrolle entlang der Führung verschoben wird.

Zum Schutz des Zustellwagens vor mechanischen Belastungen durch das Überwinden des Fahrbahnabsatzes ist es günstig, wenn der Raupenantrieb eine Federeinrichtung zur elastischen Auslenkung der Abrollfläche beim Auftreffen auf den Fahrbahnabsatz aufweist. Somit kann die Abrollfläche beim Auftreffen auf den Fahrbahnabsatz gegen die Federkraft der Federeinrichtung elastisch ausgelenkt, insbesondere verschwenkt, werden. Im unbelasteten Zustand wird die Federeinrichtung entspannt, wodurch die Abrollfläche in die Ausgangslage zurückkehrt.

Bei einer bevorzugten Ausführungsform weist die Federeinrichtung zumindest eine Schraubenfeder, vorzugsweise zwei Schraubenfedern, auf, wobei die zumindest eine Schraubenfeder vorzugsweise im Wesentlichen senkrecht zur Abrollfläche angeordnet ist. Somit kann die Schraubenfeder vorzugsweise im Wesentlichen senkrecht zur Abrollfläche gespannt und entspannt werden. Bevorzugt ist je eine Schraubenfeder auf gegenüberliegenden Seiten des Raupenantriebs vorgesehen.

Zum Auffangen der Aufprallkräfte ist es insbesondere günstig, wenn die Federeinrichtung mit der vorderen Achse der vorderen Umlaufrolle verbunden ist. Bevorzugt ist das eine Ende der Federeinrichtung, insbesondere der Schraubenfeder, mit der vorderen Achse der vorderen Umlaufrolle und das andere Ende der Federeinrichtung, insbesondere der Schraubenfeder, mit der Aufhängeeinrichtung verbunden.

Um die Überwindung des Fahrbahnabsatzes zu erleichtern, ist bevorzugt eine Sensoreinheit zur Erfassung des Fahrbahnabsatzes vorgesehen ist. Die Erfassung des Fahrbahnabsatzes mit der Sensoreinheit kann dazu genutzt werden, die Fahrgeschwindigkeit des Zustellwagens zu reduzieren, so dass die Aufprallkräfte beim Auftreffen auf den Fahrbahnabsatz keinen Schaden verursachen.

Um eine hohe Zuladung zu ermöglichen, ist bevorzugt ein Hinterradantrieb zum Antreiben der Hinterräder vorgesehen.

Bei einer bevorzugten Ausführungsform ist der Hinterradantrieb in einem Betriebsmodus zur Überwindung des Fahrbahnabsatzes mit dem Motor des Raupenantriebs gekoppelt. In diesem Betriebsmodus sind sowohl der Hinterradantrieb als auch der Raupenantrieb eingeschaltet, wobei die Fahrgeschwindigkeit des Zustellwagens mit dem Hinterradantrieb bevorzugt auf einen vorgegebenen Wert eingestellt ist. Die Geschwindigkeit der Hinterräder ist darauf abgestimmt, den Fahrbahnabsatz zu überwinden, ohne Schäden am Zustellwagen hervorzurufen.

Bei einer bevorzugten Ausführungsform ist ein Handhabungselement, insbesondere ein Handhabungsbügel, zum Lenken und/oder Schieben des Zustellwagens vorgesehen.

Der Zustellwagen kann, insbesondere an der Rückseite, ein Bedienelement zur Bedienung, insbesondere des Motors des Raupenantriebs und/oder des Hinterradantriebs, aufweisen.

Die Erfindung wird nachstehend anhand eines bevorzugten Ausführungsbeispiels weiter erläutert.

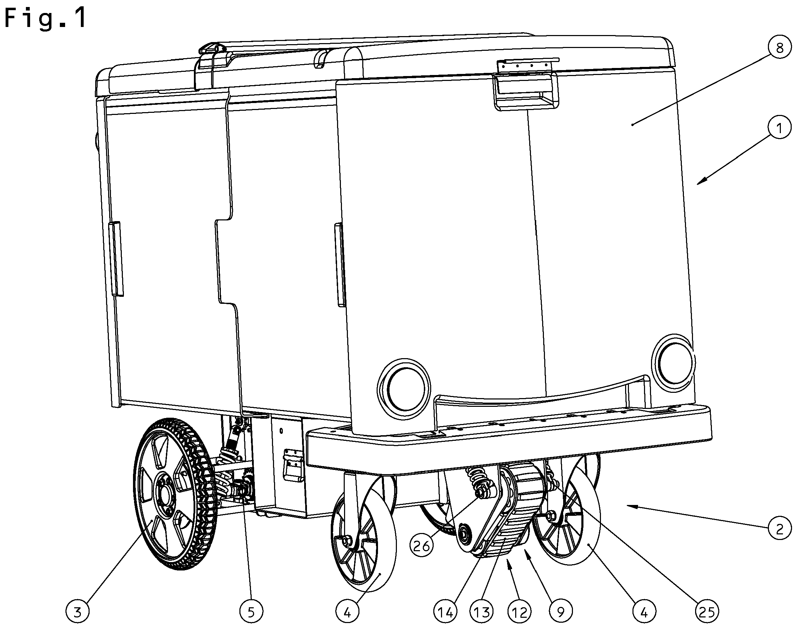

Fig. 1 zeigt einen erfindungsgemäßen Post-Zustellwagen.

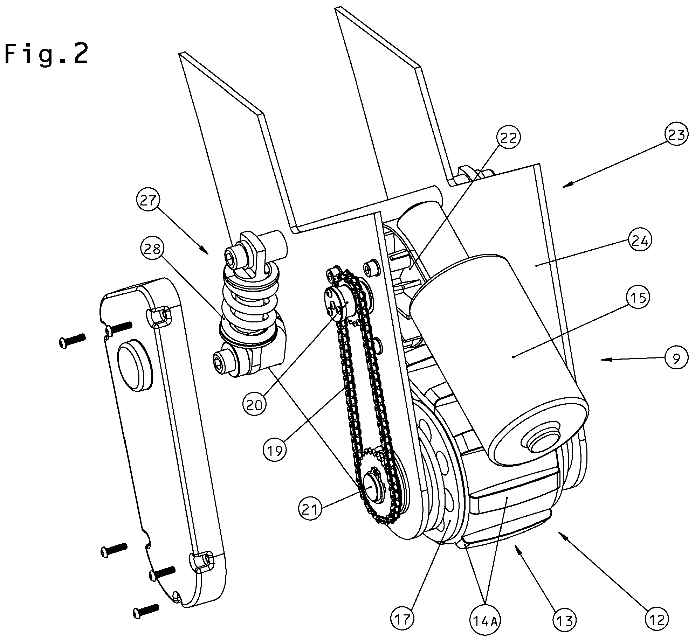

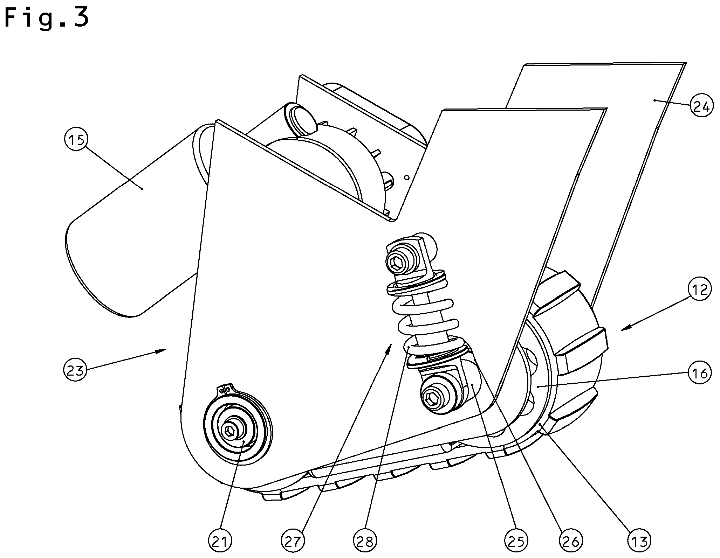

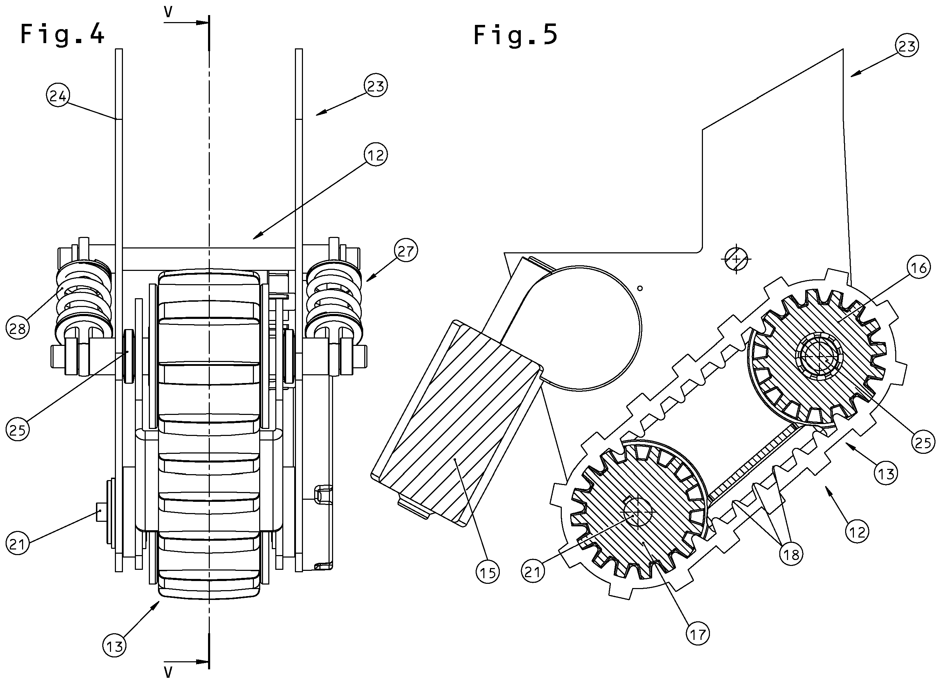

Fig. 2 bis 4 zeigen verschiedene Ansichten eines Raupenantriebs zur Überwindung einer Bordsteinkante an der Vorderseite des Post-Zustellwagens.

Fig. 5 zeigt einen Schnitt entlang der Linie V-V in Fig. 4.

Fig. 6 bis 8 zeigen verschiedene Ansichten des erfindungsgemäßen Post-Zustellwagens beim Überwinden eines Fahrbahnabsatzes mit Hilfe des Raupenantriebs.

Die Zeichnung zeigt einen Zustellwagen 1, welcher als Post-Zustellwagen zum Transport von Poststücken, wie Briefen und Paketen, ausgebildet ist. Der Zustellwagen 1 weist ein Fahrgestell 2 auf, an welchem zwei Hinterräder 3 und zwei Vorderräder 4, hier zwei Lenkrollen, angeordnet sind. Die Hinterräder 3 sind mit einem Hinterradantrieb 5, insbesondere einem Elektro-Hinterradmotor, verbunden, um den Zustellwagen 1 fortzubewegen. An der Rückseite weist der Zustellwagen 1 ein Handhabungselement 6, hier einen Handhabungsbügel, auf, mit welchem der Zustellwagen 1 gelenkt und bevorzugt zudem der Hinterradantrieb 5 durch Anschieben unterstützt werden kann. Ebenfalls an der Rückseite weist der Zustellwagen 1 ein Bedienelement 7, hier ein Bedienpaneel, auf, mit welchem der Benutzer des Zustellwagens 1 verschiedene Funktionen, beispielsweise die Geschwindigkeit des Hinterradantriebs 5, einstellen kann.

Das Fahrgestell 2 trägt einen Aufbau 8 zur Aufnahme des Transportguts. Der Aufbau 8 kann an einer der Seiten und/oder an der Oberseite jeweils zumindest eine Zugangsöffnung zum Zugriff auf das Transportgut aufweisen.

Darüber hinaus weist der Zustellwagen 1 vorne eine Einrichtung 9 zur Überwindung eines Fahrbahnabsatzes 10 auf, welcher in der Zeichnung als von der Fahrbahn 11 hochstehende Bordsteinkante veranschaulicht ist. Die Einrichtung 9 weist im Wesentlichen mittig zwischen den zwei Vorderrädern 4 einen Raupenantrieb 12 zur Überwindung des Fahrbahnabsatzes 10 auf. Der Raupenantrieb 12 weist ein Endloselement 13, hier eine umlaufende Bandkette, auf, welche an der Vorderseite eine Abrollfläche 14 zum Abrollen an dem Fahrbahnabsatz aufweist. Ein ebener Abschnitt der Abrollfläche 14 an der Vorderseite des Raupenantriebs ist, beispielsweise in einem Winkel von mehr als 20°, insbesondere von mehr als 30°, beispielsweise mehr als 40°, und vorzugsweise weniger als 88°, zur Horizontalen geneigt. Die Abrollfläche 14 ist von der Unterseite der Hinterräder 3 und der Vorderräder 4, d.h. von der Fahrbahn 11, vollständig abgehoben, so dass die Abrollfläche 14 bei der Fahrt auf der ebenen Fahrbahn 11 frei in der Luft angeordnet ist. Nur beim Auftreffen auf den Fahrbahnabsatz 10 kommt die Abrollfläche 14 des Raupenantriebs 12 mit dem Fahrbahnabsatz 10 in Kontakt. Durch die umlaufende Bewegung des Endloselements 13 wird der Zustellwagen 1 vorne so weit angehoben, dass die Vorderräder 4 den Fahrbahnabsatz 10 überwinden können. Das Endloselement 13 weist zudem von der Abrollfläche 14 hochstehende Profile 14A, hier Profilleisten, auf.

Der Raupenantrieb 12 weist einen (mit einer Stromversorgung, insbesondere einem Akku, verbundenen) Elektromotor 15 auf, mit welchem das Endloselement 13 in eine umlaufende Bewegung versetzt wird. Der Raupenantrieb 12 weist eine vordere verzahnte Umlaufrolle 16 und eine hintere verzahnte Umlaufrolle 17 auf, welche jeweils mit Führungszähnen 18 an der Innenseite des Endloselements 13 kämmen. Zum Antrieb des Endloselements 13 weist der Raupenantrieb 12 ein Transmissionselement 19, hier eine Kette, auf, welche eine Abtriebswelle 20 mit einer hinteren Achse 21 der hinteren Umlaufrolle 17 verbindet. Die Abtriebswelle 20 ist Teil eines Getriebes 22, hier ein Schneckengetriebe, welches mit dem Elektromotor 15 gekoppelt ist.

Zur Aufhängung des Raupenantriebs 12 am Fahrgestell 2 ist eine Aufhängeeinrichtung 23 vorgesehen, welche in der gezeigten Ausführung zwei Aufhängeplatten 24 beidseits des Raupenantriebs 12 samt Elektromotor 15 aufweist. Die hintere Achse 21 der hinteren Umlaufrolle 17 ist im Wesentlichen unbeweglich an den zwei Aufhängeplatten 24 der Aufhängeeinrichtung 23 angeordnet. Eine vordere Achse 25 der vorderen Umlaufrolle 16 ist verschieblich in Führungen, hier Langlochführungen 26, gelagert, welche an den gegenüberliegenden Aufhängeplatten 24 ausgebildet sind. Zudem weist der Raupenantrieb 12 eine Federeinrichtung 27 zur elastischen Auslenkung der Abrollfläche 14 beim Auftreffen auf den Fahrbahnabsatz 10 auf. Die Federeinrichtung 27 weist in der gezeigten Ausführung zwei Schraubenfedern 28 auf, welche im Wesentlichen senkrecht zur Abrollfläche 14 angeordnet sind. Die Schraubenfedern 28 der Federeinrichtung 27 sind derart mit der vorderen Achse 25 der vorderen Umlaufrolle 16 verbunden, dass das Endloselement 13 beim Auftreffen auf den Fahrbahnabsatz 10 gegen die Federkraft der Schraubenfedern 28 entlang der Langlochführungen 26 verschoben werden.

Der Zustellwagen 1 weist zudem eine (nicht dargestellte) Sensoreinheit zur Erfassung des Fahrbahnabsatzes 10 auf. Wird der Fahrbahnabsatz 10 mit der Sensoreinheit erfasst, kann der Hinterradantrieb 5 in einen Betriebsmodus zur Überwindung des Fahrbahnabsatzes 10 geschaltet werden, in welchem die Hinterräder 3 mit einer vorgegebenen Geschwindigkeit gedreht werden, wobei zudem das Endloselement 13 des Raupenantriebs 12 mit dem Elektromotor 15 bewegt wird.

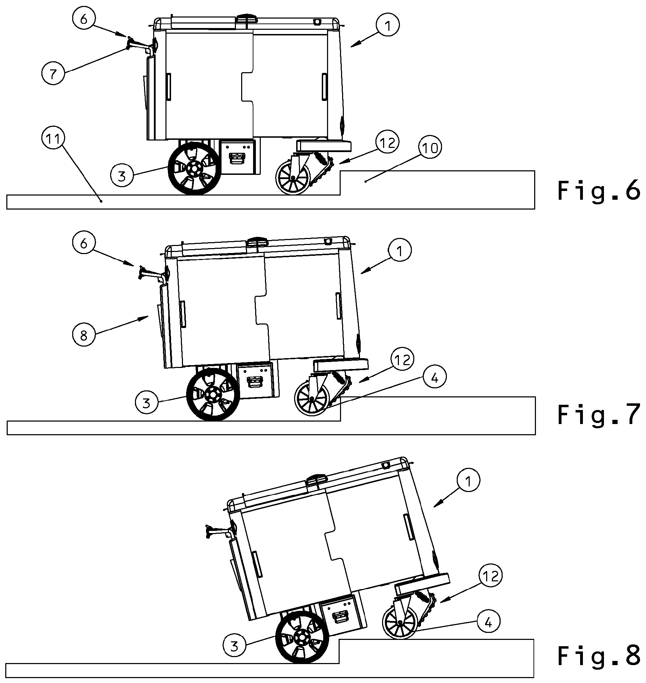

Fig. 6 bis 8 zeigen schematisch das Überwinden des Fahrbahnabsatzes 10 mit Hilfe des Raupenantriebs 12.

Wie aus Fig. 6 ersichtlich, wird der Zustellwagen 1 auf der ebenen, hier horizontalen Fahrbahn 11 ausschließlich über die Hinterräder 3 am hinteren Ende des Fahrgestells 2 vorwärts bewegt.

Wie aus Fig. 7 ersichtlich, trifft zuerst der Raupenantrieb 12 auf den Fahrbahnabsatz 10. Der Zustellwagen wird in einem Betriebsmodus mit verringerter Geschwindigkeit des Hinterradantriebs 5 und aktiviertem Raupenantrieb 12 auf den Fahrbahnabsatz 10 geführt. Durch den Raupenantrieb 12 mit Unterstützung der Hinterräder 3 werden die Vorderräder 4 über den Fahrbahnabsatz 10 gehievt.

Wie aus Fig. 8 ersichtlich, haben die Vorderräder 4 den Fahrbahnabsatz 10 überwunden. Danach können die angetriebenen Hinterräder 3 nachgeführt werden.

Bezugsziffernliste:
1 Zustellwagen
2 Fahrgestell
3 Hinterräder
4 Vorderräder
5 Hinterradantrieb
6 Handhabungselement
7 Bedienelement
8 Aufbau
9 Einrichtung zur Überwindung des Fahrbahnabsatzes
10 Fahrbahnabsatz
11 Fahrbahn
12 Raupenantrieb
13 Endloselement
14 Abrollfläche
15 Elektromotor
16 vordere Umlaufrolle
17 hintere Umlaufrolle
18 Führungszähne
19 Transmissionselement
20 Abtriebswelle
21 hintere Achse der hinteren Umlaufrolle
22 Getriebe
23 Aufhängeeinrichtung
24 Aufhängeplatten
25 vordere Achse der vorderen Umlaufrolle
26 Langlochführungen
27 Federeinrichtung
28 Schraubenfedern

Bezugsziffernliste:
1 Zustellwagen
2 Fahrgestell
3 Hinterräder
4 Vorderräder
5 Hinterradantrieb
6 Handhabungselement
7 Bedienelement
8 Aufbau
9 Einrichtung zur Überwindung des Fahrbahnabsatzes
10 Fahrbahnabsatz
11 Fahrbahn
12 Raupenantrieb
13 Endloselement
14 Abrollfläche
15 Elektromotor
16 vordere Umlaufrolle
17 hintere Umlaufrolle
18 Führungszähne
19 Transmissionselement
20 Abtriebswelle
21 hintere Achse der hinteren Umlaufrolle
22 Getriebe
23 Aufhängeeinrichtung
24 Aufhängeplatten
25 vordere Achse der vorderen Umlaufrolle
26 Langlochführungen
27 Federeinrichtung
28 Schraubenfedern

## Patentansprüche

1. Zustellwagen (1), insbesondere Post-Zustellwagen, aufweisend:
ein Fahrgestell (2), an welchem zwei Hinterräder (3),
insbesondere zwei Antriebsräder, und zwei Vorderräder (4), insbesondere zwei Lenkrollen, angeordnet sind,
einen vom Fahrgestell (2) getragenen Aufbau (8) zur Aufnahme von Transportgut, insbesondere von Poststücken,
eine Einrichtung (9) zur Überwindung eines Fahrbahnabsatzes (10), insbesondere einer Bordsteinkante, wobei die Einrichtung (9) einen Raupenantrieb (12) mit einer vorderen (16) und einer hinteren Umlaufrolle (17) aufweist, um welche ein Endloselement (13) mit einer Abrollfläche (14) umläuft, wobei der Raupenantrieb (12) weiters einen Elektromotor (15) aufweist,
eine Aufhängeeinrichtung (23) zur Aufhängung des Raupenantriebs (12) am Fahrgestell (2), wobei die Aufhängeeinrichtung (23) zwei Aufhängeteile, aufweist, an welchen die hintere Achse (21) der hinteren Umlaufrolle (17) und die vordere Achse (25) der vorderen Umlaufrolle (17) gelagert sind,
**dadurch gekennzeichnet, dass**
der Elektromotor (15) die hintere Umlaufrolle (17) antreibt,
wobei der Raupenantrieb (12) ein Getriebe (22) zwischen dem Elektromotor (15) und der hinteren Umlaufrolle (17) aufweist, wobei ein Transmissionselement (19) zur Kraftübertragung vom Getriebe (22) auf die hintere Umlaufrolle (17) vorgesehen ist,
wobei der Elektromotor (15) im Wesentlichen vollständig zwischen den zwei Aufhängeteilen der Aufhängeeinrichtung (23) angeordnet ist, wobei der Elektromotor (15) seitlich nicht über die Aufhängeteile vorsteht, welche durch stehende angeordnete Aufhängeplatten (24) gebildet sind.

2. Zustellwagen (1) nach Anspruch 1, **dadurch gekennzeichnet, dass** der Raupenantrieb (12) als Getriebe (22) ein Schneckengetriebe zwischen dem Elektromotor (15) und der hinteren Umlaufrolle (17) aufweist.

3. Zustellwagen (1) nach Anspruch 2, **dadurch gekennzeichnet, dass** als Transmissionselement (19) eine Kette zur Kraftübertragung vom Getriebe (22) auf die hintere Umlaufrolle (17) vorgesehen ist.

4. Zustellwagen (1) nach einem der Ansprüche 1 bis 3 **dadurch gekennzeichnet, dass** die hintere Achse (21) der hinteren Umlaufrolle (17) im Wesentlichen unbeweglich an den zwei Aufhängeteilen, insbesondere Aufhängeplatten (24), der Aufhängeeinrichtung (23) gelagert ist und die vordere Achse (25) der vorderen Umlaufrolle (17) entlang einer Führung, insbesondere entlang einer Langlochführung (26), beweglich an den zwei Aufhängeteilen, insbesondere Aufhängeplatten (24), der Aufhängeeinrichtung (23), gelagert ist.

5. Zustellwagen (1) nach einem der Ansprüche 1 bis 4, **dadurch gekennzeichnet, dass** der Raupenantrieb (12) eine Federeinrichtung (27) zur elastischen Auslenkung der Abrollfläche (14) beim Auftreffen auf den Fahrbahnabsatz (10) aufweist.

6. Zustellwagen (1) nach Anspruch 5, **dadurch gekennzeichnet, dass** die Federeinrichtung (27) zumindest eine Schraubenfeder (28), vorzugsweise zwei Schraubenfedern (28), aufweist, wobei die zumindest eine Schraubenfeder vorzugsweise im Wesentlichen senkrecht zur Abrollfläche (14) angeordnet ist.

7. Zustellwagen (1) nach Anspruch 5 oder 6, **dadurch gekennzeichnet, dass** die Federeinrichtung (27) mit der vorderen Achse (25) der vorderen Umlaufrolle (16) verbunden ist.

8. Zustellwagen (1) nach einem der Ansprüche 1 bis 7, **dadurch gekennzeichnet, dass** eine Sensoreinheit zur Erfassung des Fahrbahnabsatzes (10) vorgesehen ist.

9. Zustellwagen (1) nach einem der Ansprüche 1 bis 8, **dadurch gekennzeichnet, dass** ein Hinterradantrieb (5) zum Antreiben der Hinterräder (3) vorgesehen ist.

10. Zustellwagen (1) nach Anspruch 9, **dadurch gekennzeichnet, dass** der Hinterradantrieb (5) in einem Betriebsmodus zur Überwindung des Fahrbahnabsatzes (10) mit dem Motor (15) des Raupenantriebs (12) gekoppelt ist.

## Claims

1. Delivery cart (1), in particular postal delivery cart, comprising:
a chassis (2), on which two rear wheels (3), in particular two drive wheels, and two front wheels (4), in particular two caster wheels, are arranged,
a body (8) carried by the chassis (2) for receiving transport goods, in particular mail items,
a device (9) for overcoming a roadway step (10), in particular a curb, wherein the device (9) comprises a caterpillar drive (12) having a front circulating roller (16) and a rear circulating roller (17), around which an endless element (13) having a rolling surface (14) circulates, wherein the caterpillar drive (12) further comprises an electric motor (15),
a suspension device (23) for suspending the caterpillar drive (12) on the chassis (2), wherein the suspension device (23) comprises two suspension parts on which the rear axle (21) of the rear circulating roller (17) and the front axle (25) of the front circulating roller (17) are mounted,
**characterized in that**
the electric motor (15) drives the rear circulating roller (17),
wherein the caterpillar drive (12) comprises a gear mechanism (22) between the electric motor (15) and the rear circulating roller (17), wherein a transmission element (19) is provided for transmitting power from the gear mechanism (22) to the rear circulating roller (17),
wherein the electric motor (15) is arranged substantially completely between the two suspension parts of the suspension device (23), wherein the electric motor (15) does not project laterally beyond the suspension parts, which are formed by uprightly arranged suspension plates (24).

2. Delivery cart (1) according to claim 1, **characterized in that** the caterpillar drive (12) comprises, as gear mechanism (22), a worm gear mechanism between the electric motor (15) and the rear circulating roller (17).

3. Delivery cart (1) according to claim 2, **characterized in that** a chain is provided as transmission element (19) for transmitting power from the gear mechanism (22) to the rear circulating roller (17).

4. Delivery cart (1) according to any one of claims 1 to 3, **characterized in that** the rear axle (21) of the rear circulating roller (17) is mounted substantially immovably on the two suspension parts, in particular suspension plates (24), of the suspension device (23), and the front axle (25) of the front circulating roller (17) is mounted movably along a guide, in particular along an elongated hole guide (26), on the two suspension parts, in particular suspension plates (24), of the suspension device (23).

5. Delivery cart (1) according to any one of claims 1 to 4, **characterized in that** the caterpillar drive (12) comprises a spring device (27) for elastically deflecting the rolling surface (14) upon impacting the roadway step (10).

6. Delivery cart (1) according to claim 5, **characterized in that** the spring device (27) comprises at least one helical spring (28), preferably two helical springs (28), wherein the at least one helical spring is preferably arranged substantially perpendicularly to the rolling surface (14).

7. Delivery cart (1) according to claim 5 or 6, **characterized in that** the spring device (27) is connected to the front axle (25) of the front circulating roller (16).

8. Delivery cart (1) according to any one of claims 1 to 7, **characterized in that** a sensor unit is provided for detecting the roadway step (10).

9. Delivery cart (1) according to any one of claims 1 to 8, **characterized in that** a rear-wheel drive (5) is provided for driving the rear wheels (3).

10. Delivery cart (1) according to claim 9, **characterized in that** the rear-wheel drive (5) is coupled to the motor (15) of the caterpillar drive (12) in an operating mode for overcoming the roadway step (10).

## Revendications

1. Chariot de distribution (1), en particulier chariot de distribution postale, comprenant :
un châssis (2), sur lequel sont disposées deux roues arrière (3), en particulier deux roues motrices, et deux roues avant (4), en particulier deux roulettes pivotantes,
une superstructure (8) portée par le châssis (2) pour recevoir des marchandises de transport, en particulier des envois postaux,
un dispositif (9) pour franchir un décrochement de chaussée (10), en particulier une bordure de trottoir, le dispositif (9) comprenant un entraînement à chenille (12) pourvu d'un rouleau de circulation avant (16) et d'un rouleau de circulation arrière (17), autour desquels circule un élément sans fin (13) pourvu d'une surface de roulement (14), l'entraînement à chenille (12) comprenant en outre un moteur électrique (15),
un dispositif de suspension (23) pour suspendre l'entraînement à chenille (12) au châssis (2), le dispositif de suspension (23) comprenant deux parties de suspension sur lesquelles sont montés l'essieu arrière (21) du rouleau de circulation arrière (17) et l'essieu avant (25) du rouleau de circulation avant (17),
**caractérisé en ce que**
le moteur électrique (15) entraîne le rouleau de circulation arrière (17),
dans lequel l'entraînement à chenille (12) comprend un engrenage (22) entre le moteur électrique (15) et le rouleau de circulation arrière (17), un élément de transmission (19) étant prévu pour la transmission de force de l'engrenage (22) au rouleau de circulation arrière (17),
dans lequel le moteur électrique (15) est disposé sensiblement entièrement entre les deux parties de suspension du dispositif de suspension (23), le moteur électrique (15) ne faisant pas saillie latéralement au-delà des parties de suspension, lesquelles sont formées par des plaques de suspension (24) disposées verticalement.

2. Chariot de distribution (1) selon la revendication 1, **caractérisé en ce que** l'entraînement à chenille (12) comprend, en tant qu'engrenage (22), un engrenage à vis sans fin entre le moteur électrique (15) et le rouleau de circulation arrière (17).

3. Chariot de distribution (1) selon la revendication 2, **caractérisé en ce qu'**une chaîne est prévue en tant qu'élément de transmission (19) pour la transmission de force de l'engrenage (22) au rouleau de circulation arrière (17).

4. Chariot de distribution (1) selon l'une quelconque des revendications 1 à 3, **caractérisé en ce que** l'essieu arrière (21) du rouleau de circulation arrière (17) est monté de manière sensiblement immobile sur les deux parties de suspension, en particulier les plaques de suspension (24), du dispositif de suspension (23), et l'essieu avant (25) du rouleau de circulation avant (17) est monté de manière mobile le long d'un guide, en particulier le long d'un guide à trou oblong (26), sur les deux parties de suspension, en particulier les plaques de suspension (24), du dispositif de suspension (23).

5. Chariot de distribution (1) selon l'une quelconque des revendications 1 à 4, **caractérisé en ce que** l'entraînement à chenille (12) comprend un dispositif à ressort (27) pour la déviation élastique de la surface de roulement (14) lors de l'impact contre le décrochement de chaussée (10).

6. Chariot de distribution (1) selon la revendication 5, **caractérisé en ce que** le dispositif à ressort (27) comprend au moins un ressort hélicoïdal (28), de préférence deux ressorts hélicoïdaux (28), l'au moins un ressort hélicoïdal étant de préférence disposé sensiblement perpendiculairement à la surface de roulement (14).

7. Chariot de distribution (1) selon la revendication 5 ou 6, **caractérisé en ce que** le dispositif à ressort (27) est relié à l'essieu avant (25) du rouleau de circulation avant (16).

8. Chariot de distribution (1) selon l'une quelconque des revendications 1 à 7, **caractérisé en ce qu'**une unité de capteur est prévue pour la détection du décrochement de chaussée (10).

9. Chariot de distribution (1) selon l'une quelconque des revendications 1 à 8, **caractérisé en ce qu'**un entraînement de roues arrière (5) est prévu pour entraîner les roues arrière (3).

10. Chariot de distribution (1) selon la revendication 9, **caractérisé en ce que** l'entraînement de roues arrière (5) est accouplé au moteur (15) de l'entraînement à chenille (12) dans un mode de fonctionnement pour franchir le décrochement de chaussée (10).
